# Europäisches Patentamt

## European Patent Office

## Office européen des brevets

(19)

(11) Numéro de publication: **0 061 360**
**B1**

(12) # FASCICULE DE BREVET EUROPEEN

(45) Date de publication du fascicule du brevet:
02.05.85

(51) Int. Cl.⁴: **G 02 B 6/10**

(21) Numéro de dépôt: **82400208.3**

(22) Date de dépôt: **05.02.82**

(54) **Dispositif optique d'entretien d'une impulsion d'énergie radiante circulant dans un guide d'onde monomode, gyromètre et hydrophone comportant un tel dispositif.**

(30) Priorité: **27.02.81 FR 8103989**

(43) Date de publication de la demande:
**29.09.82 Bulletin 82/39**

(45) Mention de la délivrance du brevet:
**02.05.85 Bulletin 85/18**

(84) Etats contractants désignés:
**DE GB IT NL SE**

(56) Documents cités:
**EP - A - 0 018 873**
**FR - A - 2 283 424**

**IEEE JOURNAL OF QUANTUM ELECTRONICS, vol. Qe-11, no. 9, Septembre 1975, NEW YORK (US), H. NISHIHARA et al.: "Holocoupler: a novel coupler for optical circuits", pages 794-796**
*OPTICS LETTERS, vol. 5, no. 11, novembre 1980, NEW YORK (US), T. HALL et al.: "Detector for an optical fiber acoustic sensor using dynamic holographic interferometry", pages 485-487*
**OPTICS AND LASER TECHNOLOGY, vol. 11, (1979), pages 95-99**

(73) Titulaire: **THOMSON-CSF, 173, Boulevard Haussmann, F-75379 Paris Cedex 08 (FR)**

(72) Inventeur: **Huignard, Jean-Pierre, THOMSON-CSF SCPI 173, bld Haussmann, F-75360 Paris Cedex 08 (FR)**

(74) Mandataire: **Lepercque, Jean et al, THOMSON-CSF SCPI 173, Bld Haussmann, F-75379 Paris Cedex 08 (FR)**

ACTORUM AG

## Description

L'invention se rapporte à un dispositif d'entretien d'une impulsion d'énergie radiante circulant dans un guide d'onde monomode et en particulier son application à un gyromètre et à un hydrophone.

Un dispositif de ce type trouve son application dans le domaine de la mesure de faibles déphasages entre deux faisceaux qui interfèrent. Ainsi dans le cas d'un gyromètre interférométrique on utilise un guide d'onde en forme de boucle qui peut être une fibre optique enroulée en un certain nombre de spires. La vitesse angulaire à mesurer est alors déterminée par la mesure interférométrique d'un déphasage; un des faisceaux interférant ayant parcouru le guide.

Dans le domaine de la détection acoustique en milieu marin, un hydrophone à fibre optique monomode fonctionnant par effet élasto-optique, utilisant les effets d'interaction entre l'onde acoustique à détecter et une fibre optique monomode sur laquelle cette onde acoustique agit, comporte en particulier une fibre optique monomode plongée dans l'eau où se propage l'onde sonore. La propagation de cette onde sonore produit dans le milieu de propagation des variations de pression qui provoquent par effet élasto-optique des variations des paramètres géométriques et optiques de la fibre. Une onde se propageant dans la fibre optique subit des variations de phase susceptibles d'être détectées par interférométrie, au moyen d'une seconde fibre optique monomode formant bras de référence.

Mais lors de la propagation des ondes lumineuses dans le guide d'onde considéré il y a apparition de pertes. Ce qui explique la nécessité de positionner sur le parcours de l'onde lumineuse, un système compensateur de pertes.

Ainsi la demande de brevet français FR-A-2 283 424 décrit un appareil de mesure de la vitesse de rotation d'une zône déterminée, celle-ci étant entourée d'une fibre optique de guidage. Une matière d'amplification est couplée à cette fibre, des radiations sont transmises dans les deux sens à l'intérieur de celle-ci. La différence détectée entre ces deux types de radiations permet alors de connaître la rotation de cette zône.

L'article paru dans «Optics and Laser Technology», volume 11, en 1979 de la page 95 à la page 99 décrit des applications possibles de l'holographie dynamique pour l'amplification d'image. Il a trait à des milieux non linéaires réversibles, tels que l'oxyde de bismuth-silicium (BSO), qui permettent l'amplification d'ondes de lumière cohérente, d'images à 2 ou 3 dimensions constantes ou évoluant dans le temps.

Par contre l'invention se rapporte à un dispositif permettant de faire circuler dans un guide optique une impulsion d'énergie radiante issue d'une source cohérente tout en compensant à chaque révolution les pertes introduites lors de la propagation. On régénère ainsi l'impulsion à un niveau constant. On peut également selon le dispositif envisager une amplification d'une impulsion d'énergie radiante incidente en transférant l'énergie d'un faisceau de pompage vers le signal. Le dispositif proposé assure la circulation d'une impulsion d'énergie radiante dans une fibre en maintenant le niveau du signal quel que soit le nombre de tours parcourus. Pour une intégration de N tours, il induit des déphasages plus importants sur l'onde signal; ces déphasages étant plus facilement mesurables.

La présente invention a pour objet un dispositif optique d'entretien d'une énergie lumineuse circulant dans un guide d'onde monomode, ledit dispositif comprenant un guide d'onde optique monomode dans lequel circule une première onde d'énergie lumineuse issue d'une source cohérente, des moyens optiques de liaison étant couplés optiquement aux faces terminales de ce guide de façon à former une boucle circulaire, caractérisé en ce que l'énergie lumineuse a la forme d'une impulsion, que ces moyens optiques de liaison consistent en un milieu d'interaction épais dans lequel un réseau de phase permanent a été photoinduit par l'interférence de deux faisceaux issus de cette source cohérente, ce milieu étant couplé aux deux faces terminales de ce guide d'onde par l'intermédiaire de moyens optiques de focalisation, cette première onde recevant via le milieu de l'énergie d'une onde de pompage, cette onde de pompage provenant de cette source cohérente, ladite énergie étant suffisante pour entretenir l'impulsion d'énergie radiante circulant dans cette boucle. la première onde et l'onde de pompage ayant les mêmes caractéristiques optiques et géométriques que les faisceaux qui ont servi à la fabrication du réseau de phase, et l'onde de pompage ayant traversé un modulateur de phase qui permet de régler le déphasage relatif entre l'onde de pompage et la première onde tombant sur le milieu.

D'autres caractéristiques et avantages de modes de réalisation de l'invention apparaîtront dans la description ci-après, en référence aux figures annexées où:

— les figures 1 à 3 sont des figures explicatives du fonctionnement du dispositif selon l'invention;

— la figure 4 représente un mode de réalisation de l'invention;

— les figures 5, 6 et 7 représentent différents chronogrammes explicatifs du fonctionnement du dispositif selon l'invention;

— la figure 8 représente un autre mode de fonctionnement du dispositif selon l'invention.

L'invention utilise les phénomènes de couplage d'onde à la lecture de réseaux de phase. On considère donc un réseau de phase à efficacité de diffraction élevée enregistré de façon permanente sur un support photosensible constitué de structures de phases diffractantes épaisses, photoinduites par variation d'indice dans les cristaux électro-optiques, photo-polymères ou matériaux argentiques blanchis.

En effet, on dispose actuellement de matériaux permettant l'inscription des réseaux ou hologrammes de phase à efficacité de diffraction élevée qui permettent une mémorisation de l'information de façon permanente. Ces matériaux sont «épais» par rapport au pas moyen des strates photoinduites, et leur comportement à la lecture est décrit par le formalisme des ondes couplées, régi par la relation de Bragg.

Dans le cas simple de l'interférence de deux ondes planes, arrivant sur le support photosensible avec les incidences $+\theta$ et $-\theta$, l'espacement des plans de diffractions dans le support est lié à l'angle $\theta$ et à la longueur d'onde par la relation de Bragg $2\Lambda \sin\theta = \lambda$. Inversement, un réseau donné de pas $\Lambda$ diffractera de façon significative un faisceau de lecture de longueur d'onde $\lambda$, s'il arrive sur le milieu avec l'angle $\theta$, lié à $\lambda$ et $\Lambda$ par cette relation de Bragg. Un réseau donné, constitué de plans de diffraction parallèles d'espacement $\Lambda$ peut être relu par un faisceau de longueur d'onde $\lambda'$, il suffit que son angle d'incidence $\theta'$ soit ajusté de façon que la loi de Bragg $2\Lambda \sin\theta' = \lambda'$, soit vérifiée.

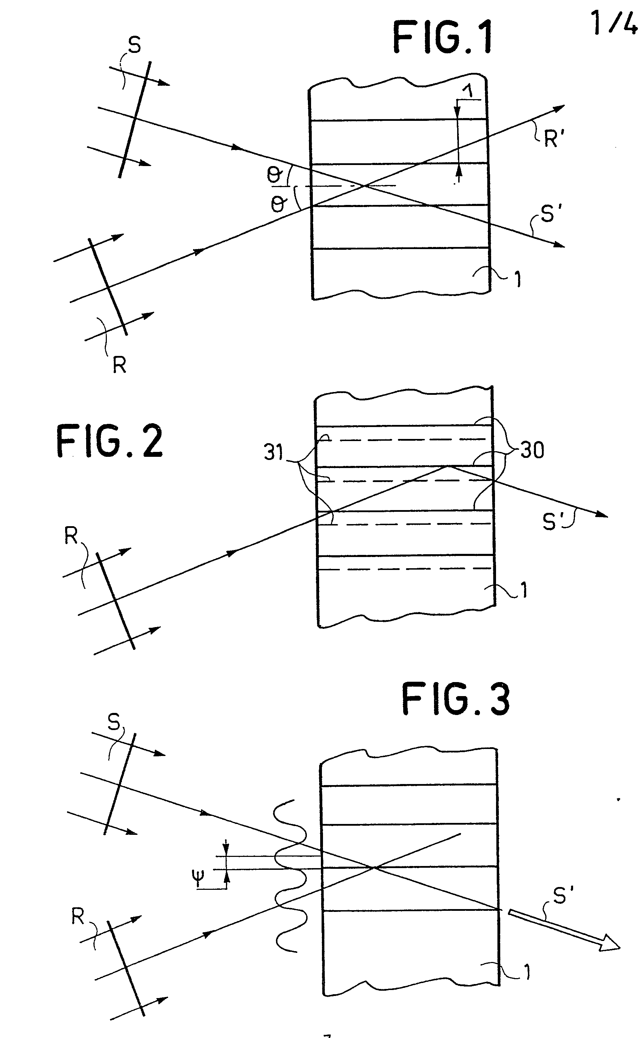

Si comme sur la figure 1, ce réseau est éclairé par deux ondes planes cohérentes R et S issues du même laser et de même intensité on a la relation $\Lambda = \dfrac{\lambda}{2\sin\theta}$.

Le pas $\Lambda$ résultant de l'interférence de R et S est rigoureusement identique à celui du réseau de phase, et ce sont, par exemple, ces mêmes faisceaux R et S qui ont servi à la fabrication du réseau de strates qui a été inscrit préablement.

Ainsi dans l'épaisseur du milieu considéré, l'onde objet S a interféré avec une onde de référence R de front d'onde plane. Un réseau de franges d'interférence ainsi créé a généré dans le cristal, un réseau de strates d'indice. Ce réseau de strates diffracte une partie de l'énergie de l'onde de référence R en une onde diffractée S' dont le front d'onde est isomorphe du front d'onde objet.

Ainsi selon le formalisme des ondes couplées, il y a, après traversée du cristal, une redistribution de l'énergie entre les deux faisceaux. Cette nouvelle répartition d'énergie est fonction du déphasage relatif $\psi$ entre les deux ondes soient:

$-I_R, I_S$:      L'intensité des deux ondes qui interfèrent;

$-I_R', I_S'$:      L'intensité des deux ondes à la sortie du cristal;

$\Psi$:      Le déphasage de l'intensité lumineuse par rapport au réseau de phase photoinduit;

$\eta$:      L'efficacité de diffraction de la structure.

Les intensités $I_S$ et $I_R$ s'obtiennent respectivement par les relations suivantes:

$$I_R' = I_R(1-\eta) + \eta I_S - 2\sqrt{I_R(1-\eta)I_S\eta}\,\sin\Psi$$
$$I_S' = I_R(1-\eta) + \eta I_S + 2\sqrt{I_R(1-\eta)I_S\eta}\,\sin\Psi$$

Dans le cas particulier de la figure $I_R = I_S = I_0$ soit:

$$I_R' = I_0[1 - 2\times\sqrt{\eta(1-\eta)}\,\sin\Psi]$$
$$I_S' = I_0[1 + 2\times\sqrt{\eta(1-\eta)}\,\sin\Psi)$$

Le transfert d'énergie est donc optimum lorsque l'on satisfait simultanément aux conditions suivantes:

$$\eta = 50\% \qquad \Psi = \pi/2$$

Dans ce cas, on obtient après traversée du réseau de phase:

$$I_R' = O;\ I_S' = 2I_0$$

L'interprétation physique des phénomènes est la suivante: l'onde R incidente est diffractée par le réseau de phase tri-dimensionnel. L'onde S' ainsi générée est, par exemple, en retard de phase de $\pi/2$ par rapport à l'onde de lecture R. Dans un milieu 1 dans lequel interfèrent deux ondes il y a, en effet, déphasage de $\pi/2$ entre le réseau d'interférence 31 des deux faisceaux et le réseau de phase 30, comme cela est représenté à la figure 2.

Par contre l'onde R' qui est générée, par diffraction de l'onde S serait en avance de phase de $\pi/2$ par rapport à cette même onde S.

Du fait de l'introduction d'un déphasage $\Psi = \pi/2$ entre les deux ondes R et S qui arrivent sur le milieu 1 il y a donc mise en phase cohérente de l'onde S' générée et de l'onde incidente S. En effet pour l'onde S', comme représenté à la figure 3 le déphasage résultant par rapport à l'onde S est de: $-\pi/2 + \pi/2$; donc ce déphasage est nul. Par contre pour l'onde R' le déphasage résultant par rapport à l'onde R est $\pi/2 + \pi/2 = \pi$. Par conséquent il y a interférence destructive dans la direction du faisceau R et donc diminution de l'énergie directement transmise selon R'.

Les conditions optimales pour le transfert d'énergie sont satisfaites avec les conditions expérimentales suivantes:

$$\eta = 50\%;\ I_R = I_S = I_0;\ \Psi = \frac{\pi}{2}$$

et donc le gain de $\dfrac{I_S'}{I_S}$ vaut 3 dB.

Ces conditions sont remplies avec un milieu 1 réalisé en gélatine.

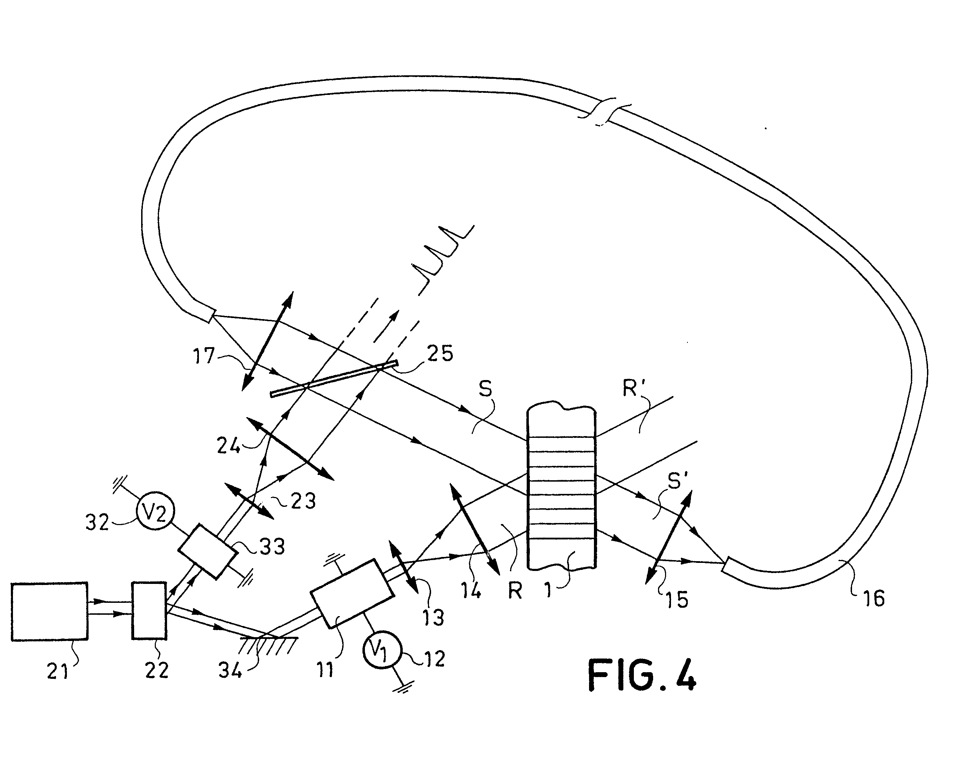

Un mode de réalisation du dispositif de l'invention basé sur les phénomènes de couplage d'ondes précédemment décrites est représenté à la figure 4.

Ainsi dans le cas considéré le réseau d'intensité lumineuse de l'interférence des deux faisceaux R et S est déphasé de $\pi/2$ par rapport au réseau de phase ce qui a comme conséquence d'obtenir une onde diffractée de l'onde R sur le réseau de phase superposée à l'onde S transmise: tout se passe comme si l'onde transmise S' étant enrichie d'une fraction de l'énergie de l'onde référence.

Le faisceau S' issu du réseau est couplé au milieu de propagation qui peut être par exemple un guide d'onde ou une fibre monomode par l'intermédiaire de composants optiques classiques. Dans le cas considéré à la figure 4, le milieu 1 est couplé à la fibre 16 par l'intermédiaire des lentilles convergentes 15 et 17.

Sur cette figure 4 les deux faisceaux S et R sont issus d'un même laser 21 après traversée d'un séparateur de faisceaux 22.

Le faisceau R traverse un modulateur de phase 11 puis un élargisseur de faisceau composé de deux lentilles 13 et 14, après avoir été préablement réfléchi par un miroir 34. Le faisceau S consiste en une impulsion d'énergie radiante qui est entrée initialement grâce à un modulateur d'amplitude 33 piloté par un générateur 32. Cette impulsion après traversée d'un élargisseur de faisceau (23, 24) est entrée dans la boucle par l'intermédiaire d'une lame séparatrice 25. Cette même lame séparatrice permet d'ailleurs de sortir l'impulsion qui circule dans la boucle formée par la fibre 16 couplée au milieu 1. On peut d'ailleurs ôter cette lame une fois que le processus est lancé.

Un autre montage possible consiste à supprimer le séparateur de faisceau 22, le modulateur 33, et les lentilles 23 et 24. On envoie tout d'abord une impulsion d'énergie radiante sur le faisceau R. Et ensuite en commutant la phase du laser de $\pi/2$, on fonctionne avec le faisceau R désiré.

Le signal sortant de cette fibre 16 est réinjecté à l'entrée du réseau où il interfère de façon cohérente avec l'onde R issue du laser 21. Le déphasage $\Psi = \pi/2$ est ajusté de façon précise à l'aide du modulateur de phase 11 électro-optique disposé sur le faisceau R par exemple. Ce modulateur étant attaqué par une tension $V_1$ on ajuste les pertes par absorption optique et par couplage de l'onde signal S à 3 dB. Les pertes dues au couplage extérieur du faisceau S par l'intermédiaire d'une lame séparatrice 18 sont d'environ 1 dB, et les pertes dues au couplage entre la fibre 16 et le milieu 1 et les pertes dans cette fibre 16 sont d'environ 2 dB.

Dans ces conditions le gain obtenu par transfert d'énergie de l'onde de pompage R vers l'onde signal S compense les pertes et le niveau de l'impulsion signal reste le même quel que soit le nombre de passages dans le milieu de propagation. Le bon fonctionnement du système exige la stabilité dans le temps de la condition de phase initiale $\Psi = \pi/2$, d'où la nécessité d'une très bonne stabilité du mode de la source laser. Les exigences quant à la longueur de cohérence de la source monomode peuvent être réduites si le temps de transit $\tau$ de l'impulsion dans la fibre est un multiple de $\frac{2l}{c}$;l étant la longueur de la cavité laser. En effet $\frac{2l}{c}$ est l'intervalle de temps entre deux maxima de cohérence pour une cavité laser. Il y a alors une bonne cohérence du fonctionnement de la boucle formé par la spire 16 et le milieu 1 par rapport au fonctionnement de la cavité laser.

Le dispositif proposé assure donc la circulation d'une impulsion optique dans une fibre, ou guide monomode en maintenant constant le niveau du signal quelque soit le nombre de tours parcourus. Il s'agit là d'une pripriété particulièrement intéressante pour la rèalisation de capteurs à fibres tels que gyromètres, hydrophones ..., où l'on intégre sur une longueur L une très faible modification de la phase de l'onde dans un milieu de propagation. Compte tenu du compromis à maintenir entre le niveau de détection et l'absorption du signal dans le milieu de propagation on peut montrer que tout capteur interférométrique classique à fibres est limité à une longueur d'intéraction L optimum déduite de la relation $\alpha\, L_{op} \cong 8{,}7$; $\alpha$ étant le coefficient d'absorption du guide en dB/km à la longueur d'onde d'utilisation.

Cette condition correspond à une réduction de la puissance optique de $1/e^2$.

Le dispositif proposé permet donc de s'affranchir de cette limite, et dans ces conditions, il induit des déphasages plus importants sur l'onde signal. De façon équivalente, il permet d'utiliser un microguide de longueur réduite mais à coefficient d'absorption plus élevé par exemple guidé en anneau réalisé sur du $LiNbO_3$: $\alpha \cong 1$ dB/cm$^{-1}$. L'ensemble de la structure optique présenté peut être réalisé par les techniques optiques intégrées sur un substrat unique tel que $LiNbO_3$, le réseau de phase étant par exemple photoinduit par effet photoréfractif dans le substrat électro-optique.

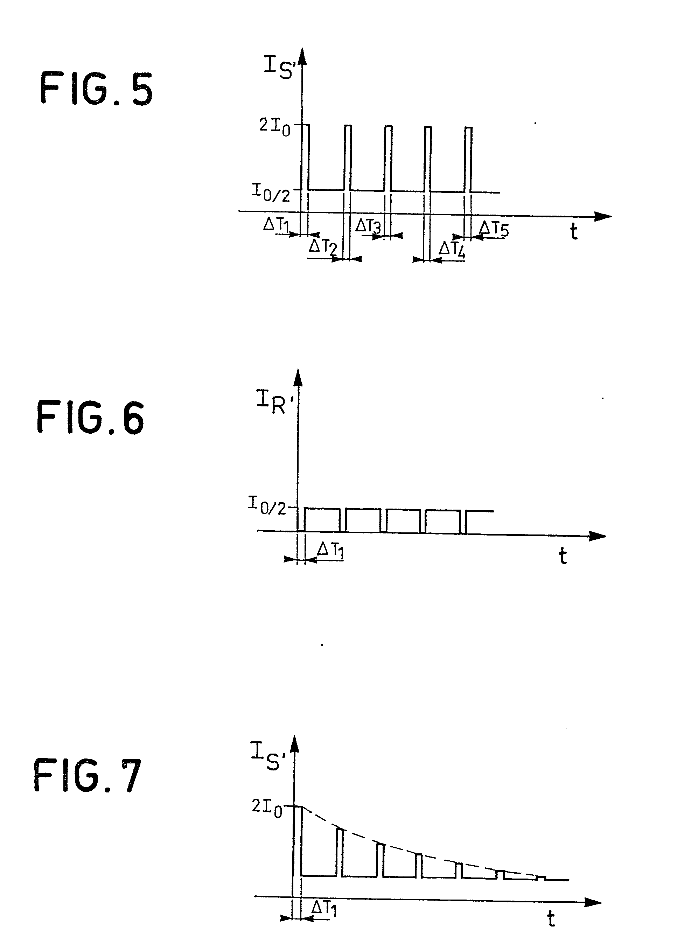

Ainsi la forme de l'onde signal S', en utilisant le dispositif proposé, avec une compensation des pertes effective c'est-à-dire avec $\Psi = \pi/2$, est représentée à la figure 5 par la courbe de l'intensité lumineuse $I_S'$ en fonction du temps. Pendant le temps $\Delta T$ on a $I_S = 2I_0$ comme cela a été expliqué précédemment. Par contre pendant le reste de la période seule la partie du faisceau R diffracté sur le réseau de phase est transmise ce qui correspond à une intensitée de $\frac{I_0}{2}$ du fait du rendement de diffraction: $\eta = \frac{1}{2}$.

Le signal $I_R'$ est le signal complémentaire de ce signal $I_S'$. En effet pendant le temps $\Delta T$ il n'y a pas de transmission et donc $I_R' = 0$. Pendant le reste de la période seule la partie provenant de R est transmise et du fait du rendement de diffraction $\eta = 0{,}5$ on a $I_R' = \frac{I_0}{2}$.

Lorsqu'il n'y a pas compensation des pertes, c'est à dire avec $\Psi = 0$, le signal $I_S'$ a la forme représenté à la figure 7, l'enveloppe des impulsions est de la forme $e^{-\alpha L}$.

Ainsi lorsque ce dispositif est utilisé dans un gyromètre, on retouche le modulateur de phase jusqu'à avoir un signal $I_S'$ de la forme représentée à la figure 5. Cela nous permet de mesurer le déphasage dû à la rotation de la boucle.

Dans le cas des très faibles déphasages induits, si l'impulsion signal voit à chaque passage un déphasage élémentaire $\Delta\Phi = \frac{2\eta}{\lambda} \times L \times \Delta\eta$, pour une intégration de N tours, le déphasage résultant sera:

$$\Delta\Phi = N \times \frac{2\pi}{\lambda} \times L \times \Delta\eta$$

$$\Delta\Phi << \pi/2$$

$\Delta\eta$ étant la variation de grandeur à mesurer, ici une variation d'indice par exemple.

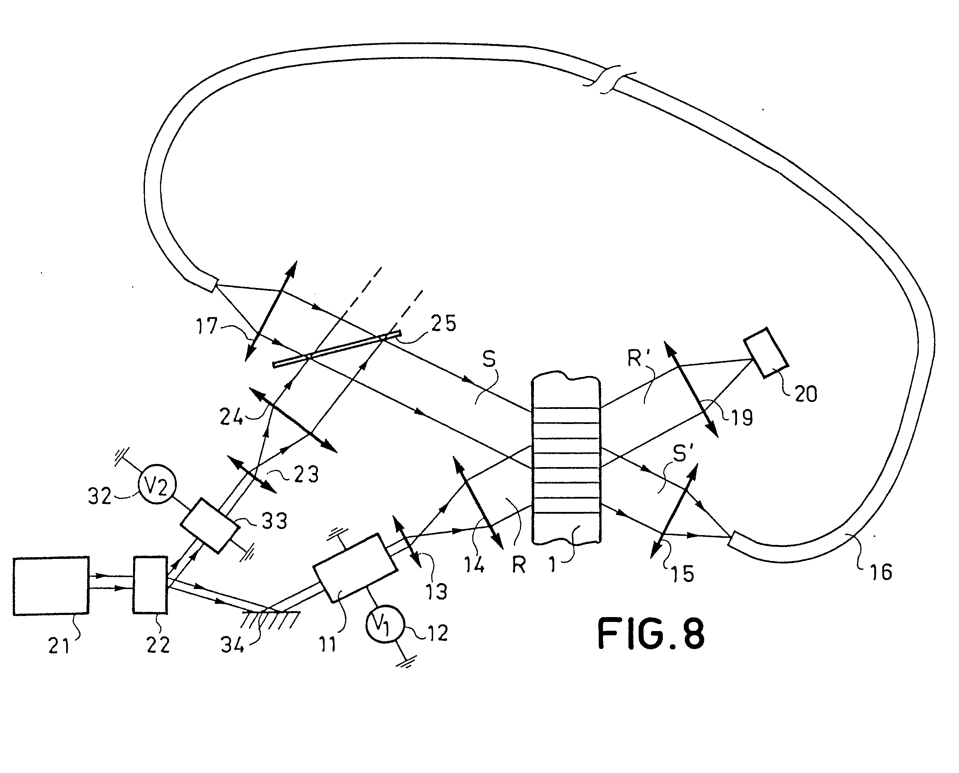

On considère alors la figure 8. Au but du temps $T = N \times \tau$; $\tau$ étant le temps de parcours dans la fibre il y a un faible désaccord de la condition de phase initiale $\Psi = \pi/2$ et l'intensité transmise sur le faisceau $I_R$ argumente.

Avec $\eta = 0{,}5$ on a pendant les temps $\Delta Ti$: $I_R = I_0 [1-\sin(\pi/2 + \Phi)]$ $I_R = I_0 [1 + \cos(\pi + \Delta\Psi)]$

$$I_R = \frac{I^0}{2} \times \Delta\Psi^2$$

On interpose alors un détecteur 20 sur le parcours de faisceau après focalisation par une lentille 19, on peut d'ailleurs, ne valider de détecteur qu'entre les deux fronts de l'impulsion, pendant le temps ΔT. La détection des transitions brusques positive et négative permettant alors d'invalider et de valider le signal de détection pendant le temps ΔT.

Une détection linéaire sur ΔΨ peut être obtenue en introduisant un décalage $\Delta\Psi_0$ par rapport à la condition initiale $\Psi = \pi/2 - \Delta\Psi_0$ avec $\Delta\Psi_0 < <\pi/2$, et $\Delta\Psi_0 > \Delta\Psi$.

On a pendant les temps ΔTi:

$$I_R = I_0 [1 + \cos(\pi + \Delta\Psi + \Delta\Psi_0)]$$

$$I_R \cong \frac{I_0}{2} [\Delta\Psi_0^2 + 2\Delta\Psi_0\Delta\Psi]$$

$$\Delta I_R \cong I_0 \Delta\Psi_0 \Delta\Psi(t)$$

Ainsi la courbe $I_R'$ ne passe plus par uéro mais elle a ses minima qui varient en fonction de ΔΨ autour d'une droite parallèle à l'axe des x d'ordonnée $\Delta I_R$ due à ce déphasage $\Delta\Psi_0$.

$$<I_R> = \frac{I_0}{2} \Delta\Psi^2_0.$$ Dans ces conditions, la contribution au courant de bruit dû aux photos sur le photodétecteur reste faible.

$$<i_{ph}^2> = 2e \times \Delta f \times <I_R>.$$

Ce détecteur 20 lorsque la valeur moyenne $<i_{ph}>$ est non nulle permet de détecter le désaccord de la condition de phase initiale $\Psi = \pi/2$.

Ce signal de détection peut donc être utilisé pour calculer le déphasage existant dans la boucle d'un gyromètre du fait de la rotation. En effet en l'annulant on peut mesurer ce déphasage et par là même la vitesse de rotation. Du fait de l'invention, ce déphasage et cette vitesse de rotation peuvent être très faibles, car on peut travailler avec N tours de boucle et ainsi augmenter d'autant l'effet résultant.

Pour le dispositif de l'invention, on peut considédérer une longueur de fibre de 1000 mètres par exemple, ce qui correspond à un temps de transit de 5 millisecondes dans cette fibre 16. On peut alors considérer que l'impulsion générée grâce au modulateur d'amplitude 33 a une durée de 100 nanosecondes par exemple.

## Revendications

1. Dispositif optique d'entretien d'une énergie lumineuse circulant dans un guide d'onde monomode, ledit dispositif comprenant un guide d'onde optique monomode dans lequel circule une première onde (S) d'énergie lumineuse issue d'une source cohérente (21), des moyens optiques de liaison étant couplés optiquement aux faces terminales de ce guide de façon à former une boucle circulante, caractérisé en ce que l'énergie lumineuse a la forme d'une impulsion, que ces moyens optiques de liaison consistent en un milieu d'interaction (1) épais dans lequel un réseau de phase permanent a été photoinduit par l'interférence de deux faisceaux issus de cette source cohérente (21), ce milieu étant couplé aux deux faces terminales de ce guide d'onde par l'intermédiaire de moyens optiques de focalisation, cette première onde (S) recevant via le milieu (1) de l'énergie d'une onde de pompage (R), cette onde de pompage (R) provenant de cette source cohérente (21), ladite énergie étant suffisante pour entretenir l'impulsion d'énergie radiante circulant dans cette boucle, la première onde (S) et l'onde de pompage (R) ayant les mêmes caractéristiques optiques et géométriques que les faisceaux qui ont servi à la fabrication du réseau de phase, et l'onde de pompage (R) ayant traversé un modulateur de phase (11) qui permet de régler le déphasage relatif entre l'onde de pompage (R) et la première onde (S) tombant sur le milieu (1).

2. Dispositif optique selon la revendication 1, caractérisé en ce que ce guide d'onde monomode est une fibre optique monomode (16).

3. Dispositif optique selon la revendication 1, caractérisé en ce que le matériau constituant ce milieu d'interaction (1) est de la gélatine.

4. Dispositif optique selon la revendication 1, caractérisé en ce que les moyens optiques de focalisation sont des lentilles convergentes (15, 17).

5. Dispositif optique selon la revendication 1, caractérisé en ce qu'une lame séparatrice (25) est interposée sur le parcours de l'impulsion d'énergie radiante.

6. Dispositif optique selon la revendication 1, caractérisé en ce qu'un séparateur de faisceau (22) est disposé en sortie de cette source cohérente (21), l'une des composantes du faisceau permettant après traversée d'un modulateur d'amplitude (33) et d'un élargisseur de faisceau (23, 24) l'insertion de cette impulsion d'énergie lumineuse dans la boucle par l'intermédiaire d'une lame séparatrice (25).

7. Dispositif selon la revendication 1, caractérisé en ce que ce déphasage est réglé à π/2.

8. Dispositif selon la revendication 1, caractérisé en ce qu'un détecteur (20) reçoit une partie (R') de l'onde de pompage (R) non diffractée par le milieu (1).

9. Gyromètre, caractérisé en ce qu'il comprend un dispositif optique selon l'une quelconque des revendications 1 à 8.

10. Hydrophone, caractérisé en ce qu'il comprend un dispositif optique selon l'une quelconque des revendications 1 à 8.

## Patentansprüche

1. Optische Vorrichtung zur Erhaltung einer Lichtenergie, welche in einem Monomode-Wellenleiter umläuft, wobei die genannte Vorrichtung einen optischen Monomode-Wellenleiter enthält, worin eine erste Welle (S) aus Lichtenergie zirkuliert, die von einer kohärenten Quelle (21) abgegeben wird, wobei optische Verbindungsmittel optisch an die Endflächen dieses Leiters derart angekoppelt sind, dass eine Umlaufschleife gebildet wird, dadurch gekennzeichnet, dass die Lichtenergie die Form eines Impulses aufweist, dass diese optischen Verbindungsmittel aus einem dikken Wechselwirkungsmedium (1) bestehen, worin ein dauerhaftes Phasengitter photoinduziert wurde durch Interferenz von zwei Bündeln, die von dieser kohärenten Quelle (21) abgegeben wurden, wobei dieses Medium an die zwei Endflächen dieses Wellenleiters über optische Fokussiermittel angekoppelt ist, diese erste Welle (S) über das Medium (1) Energie von einer Pumpwelle (R) empfängt, wobei diese Pumpwelle (R) aus dieser kohärenten Quelle (21) stammt, wobei ferner die genannte Energie ausreicht, um den Strahlungsenergieimpuls aufrechtzuerhalten, der in dieser Schleife umläuft, wobei ferner die erste Welle (S) und die Pumpwelle (R) dieselben optischen und geometrischen Kenndaten wie die Bündel aufweisen, die zur Herstellung des Phasengitters verwendet wurden, und wobei die Pumpwelle (R) einen Phasenmodulator (11) durchquert hat, der die Einstellung der relativen Phasenverschiebung zwischen der Pumpwelle (R) und der ersten Welle (S) ermöglicht, die auf das Medium (1) auftrifft.

2. Optische Vorrichtung nach Anspruch 1, dadurch gekennzeichnet, dass der Monomode-Wellenleiter eine optische Monomode-Faser (16) ist.

3. Optische Vorrichtung nach Anspruch 1, dadurch gekennzeichnet, dass das Material, welches das Wechselwirkungsmedium (1) bildet, Gelatine ist.

4. Optische Vorrichtung nach Anspruch 1, dadurch gekennzeichnet, dass die optischen Fokussiermittel Konvergenzlinsen (15, 17) sind.

5. Optische Vorrichtung nach Anspruch 1, dadurch gekennzeichnet, dass eine Teilerplatte (25) auf dem Weg des Strahlungsenergieimpulses eingefügt ist.

6. Optische Vorrichtung nach Anspruch 1, dadurch gekennzeichnet, dass ein Strahlteiler (22) am Ausgang dieser kohärenten Quelle (21) angeordnet ist, wobei die eine der Komponenten des Bündels nach Durchquerung eines Amplitudenmodulators (33) und einer Bündel-Aufweitungseinrichtung (23, 24) die Einführung dieses Lichtenergieimpulses in die Schleife über eine Teilerplatte (25) gestattet.

7. Vorrichtung nach Anspruch 1, dadurch gekennzeichnet, dass die Phasenverschiebung auf $\pi/2$ eingestellt ist.

8. Vorrichtung nach Anspruch 1, dadurch gekennzeichnet, dass ein Detektor (20) einen Teil (R') der Pumpwelle (R) empfängt, der nicht durch das Medium (1) gebrochen wurde.

9. Gyrometer, dadurch gekennzeichnet, dass es eine optische Vorrichtung nach einem der Ansprüche 1 bis 8 umfasst.

10. Hydrophon, dadurch gegekennzeichnet, dass es eine optische Vorrichtung nach einem der Ansprüche 1 bis 8 umfasst.

**Claims**

1. Optical device for sustaining a luminous energy circulating within a monomode waveguide, said device comprising an optical monomode waveguide wherein a first wave (S) of luminous energy supplied by a coherent source (21) circulates, optical connection means being optically coupled to the end faces of this guide in a manner to form a circulation loop, characterized in that the luminous energy has the shape of a pulse, that these optical connection means consist in a thick interaction medium (1) wherein a permanent phase grid has been photoinduced by interference of two beams supplied by this coherent source (21), this medium being coupled to the two end faces of this waveguide through optical focusing means, this first wave (S) receiving through the medium (1) energy from a pumping wave (R), this pumping wave (R) originating from this coherent source (21), said energy being sufficient for sustaining the radiating energy pulse circulating within said loop, the first wave (S) and the pumping wave (R) having the same optical and geometric characteristics as the beams which have been used for the production of the phase grid, and the pumping wave (R) having crossed a phase modulator (11) permitting to adjust the relative phase shift between the pumping wave (R) and the first wave (S) incident on the medium (1).

2. Optical device according to claim 1, characterized in that this monomode waveguide is an optical monomode fiber (16).

3. Optical device according to claim 1, characterized in that the material of which this interaction medium (1) ist formed is gelatine.

4. Optical device according to claim 1, characterized in that the optical focusing means are convergent lenses (15, 17).

5. Optical device according to claim 1, characterized in that a splitter sheet (25) is interposed on the path of the radiating energy pulse.

6. Optical device according to claim 1, characterized in that a beam splitter (22) is arranged at the output of this coherent source (21), one of the components of the beam permitting, after having crossed an amplitude modulator (33) and a beam widener (23, 24), the introduction of this luminous energy pulse into the loop through a splitter sheet (25).

7. Device according to claim 1, characterized in that the phase shift is adjusted to $\pi/2$.

8. Device according to claim 1, characterized in that a detector (20) receives a portion (R') of the pumping wave (R) which is not diffracted by the medium (1).

9. Gyrometer, characterized in that it comprises an optical device according to any of claims 1 to 8.

10. Hydrophone, characterized in that it comprises an optical device according to any of claims 1 to 8.

# FIG.1

S

R'

S'

θ

θ

1

R

# FIG.2

31

30

R

S'

1

# FIG.3

S

Ψ

R

S'

1

0 061 360

FIG.4

FIG.5

FIG.6

FIG.7

FIG.8